# EUROPÄISCHE PATENTSCHRIFT

(11) **EP 2 071 160 B1**
(45) Veröffentlichungstag und Bekanntmachung des Hinweises auf die Patenterteilung: **11.05.2016**
(21) Anmeldenummer: 08105562.6
(22) Anmeldetag: 13.10.2008
(51) Int. Cl.: F02D 21/08, F02D 41/40, F02D 43/00

(54) **Steuerverfahren zur zeitlichen Erhöhung der Abgastemperatur**
Control method to temporarily increase the temperature of exhaust gas
Procédé de commande destiné à l'augmentation temporaire de la température de gaz d'échappement

(30) Priorität: 13.12.2007 DE 102007060142
(43) Veröffentlichungstag der Anmeldung: 17.06.2009
(73) Patentinhaber: Ford Global Technologies, LLC, Dearborn, MI 48126 (US)
(72) Erfinder: Karvounis, Evangelos, 52070, Aachen (DE); Roettger, Daniel, 4731, Eynatten (BE); Kuenstler, Johannes, 52428 Jülich (DE); Vigild, Christian Winge, 52457, Aldenhoven (DE)
(74) Vertreter: Drömer, Hans-Carsten

(56) Entgegenhaltungen:
- EP-A2- 1 178 197
- WO-A1-99/24732
- WO-A1-99/41495
- DE-A1- 19 926 138
- DE-A1- 19 957 715
- US-A1- 2005 188 948

## Beschreibung

Die Erfindung betrifft ein Steuerverfahren zur Erhöhung der Abgastemperatur eines Verbrennungsmotors, der in seinem Abgasstrang zumindest eine Abgasnachbehandlungseinrichtung hat, und der ein Abgasrückführsystem aufweist, dem ein Regelsystem zugeordnet ist.

Die DE 199 57 715 A1 offenbart vier Reaktivierungsverfahren, wobei das erste Reaktivierungsverfahren als natürliches und das zweite bis vierte Reaktivierungsverfahren als Zwangsverfahren bezeichnet werden. In einem zweiten Reaktivierungsverfahren wird die Hauptbrennstoffeinspritzperiode gegenüber dem normalen Betrieb verzögert, wobei die eingespritzte Brennstoffmenge vergrößert wird. In einem dritten Reaktivierungsverfahren wird ein Öffnungsbetrag eines EGR-Steuerventils vergrößert, wobei allerdings eine Sekundäreinspritzung durchgeführt wird. Bei einem vierten Reaktivierungsverfahren wird ein Abgasdrosselventil bezogen auf einen normalen Betrieb in seiner Öffnungsstellung reduziert, wobei wiederum eine Sekundärbrennstoffeinspritzung durchgeführt wird. Bei dem vierten Verfahren soll die Hauptbrennstoffeinspritzmenge vergrößert werden, wobei zusätzlich zur Sekundäreinspritzung noch die Hauptbrennstoffeinspritzmenge zu erhöhen ist.

Die EP 1 178 197 A2 offenbart, dass bei einem Start oder einem Warmlauf des Motors eine Klappe in der Abgasleitung geschlossen würde, wobei eine Kraftstoffmenge der Haupteinspritzung bei geschlossenem Ventil erhöht und eine zusätzliche (Sekundär)einspritzung bei einem Expansionshub durchgeführt wird.

Der DE 199 26 138 A1 kann der Fachmann allenfalls die Lehre entnehmen, dass eine verspätete Einspritzung, z.B. durch eine Einspritzung in den Expansionshub eine Abgastemperaturerhöhung bewirken kann.

Die US2005/188948 A1 offenbart, dass zur Regenerierung des Dieselpartikelfilters der Verbrennungsmodus des Dieselmotors von mager auf den verspäteten Verbrennungsmodus geändert wird.

Die WO99/41495 A1 und die WO99/24732 A1 offenbaren eine Abgasdrossel, welche als Warmlaufeinrichtung (WO99/41495 A1) und als Abgasbremse (WO99/41495 A1 und WO99/24732 A1) wirken soll.

Die EP 0 521 411 A1 eine Abgasleitung einer Brennkraftmaschine, mit mindestens einem in der Abgasleitung angeordneten Katalysator und einem in dieser angeordneten, verstellbaren Drosselelement. Das Drosselelement ist mit einem stromauf liegenden ortsfesten Ende benachbart einer Seitenwandung der Abgasleitung angeordnet. Ein stromab liegendes, bewegliches Ende ist bei kalter Brennkraftmaschine einen Spalt mit einer gegenüberliegenden Seitenwandung bildend angeordnet.

Die US 7,131,271 B2 befaßt sich mit einem Verfahren zur Steuerung einer Niederdruck-Abgasrückführregelung eines Verbrennungsmotors. Das Abgasrückführsystem weist ein Drosselventil und ein Abgasrückführventil auf. Die beiden Ventile werden über eine zentrale Steuereinheit koordiniert gesteuert, so dass das jeweilige Ventil selektiv verstellt wird. Wird das Drosselventil geschlossen, wird gleichzeitig, aufgrund des Druckaufbaus das Abgasregelventil geöffnet.

Üblicherweise weisen Verbrennungsmotoren in ihrem Abgasstrang Abgasnachbehandlungseinrichtungen, wie zum Beispiel Katalysatoren und Partikelfilter, insbesondere Dieselpartikelfilter auf. Diese Abgasnachbehandlungseinrichtungen benötigen bekannterweise ein gewisses Abgastemperaturniveau um beispielsweise CO im Abgas zu reduzieren oder, im Falle des Dieselpartikelfilters, um eine erforderliche Regeneration durchführen zu können. Beispielsweise kann die Abgastemperatur mittels einer Nacheinspritzung von Kraftstoff in den Brennraum erhöht werden. Diese Nacheinspritzung wird nach einer zeitlich, üblicherweise kurz vor oder nach dem oberen Totpunkt des Kolbens fixierten Haupteinspritzung durchgeführt. Ein Problem der Nacheinspritzung ist darin zu sehen, dass ein Teil des zusätzlich eingespritzten Kraftstoffs nicht verbrannt wird, sondern sich an den Zylinderinnenwänden niederschlägt und in das Motoröl gelangen kann. Damit wird nachteiliger Weise eine unerwünschte Motorölverdünnung mit dem Kraftstoff hingenommen, um den Vorteil der Abgastemperaturerhöhung zu erreichen.

Übliche Einlaß- und Auslaßsysteme eines Verbrennungsmotors bedürfen einer extensiven Steuerung und Kalibrierung, um eine akzeptable Leistung sowohl während des dynamischen Betriebs des Motors als auch im Stationärbetrieb gewährleisten zu können. Insbesondere bei Dieselmotoren ist ein Hauptproblem in der äußerst schwierigen Kopplung zwischen der Abgasrückführungsregelung und der davon getrennten Ladedruckregelung zu sehen. Das bedeutet, es ist derzeit nicht möglich, einen der beiden Parameter zu regeln, ohne die Regelung des anderen Parameters zu stören bzw. nachteilig zu beeinflussen. Vielmehr müssen beide Parameter parallel überwacht bzw. geregelt werden. Dies erfordert jeweils separate Elemente, die getrennt geregelt werden müssen und äußerst kostenintensiv sind.

Der Erfindung liegt die Aufgabe zugrunde, ein Steuerverfahren zur Erhöhung der Abgastemperatur zur Verfügung zu stellen, bei dem die Motorölverdünnung weitgehend vermieden werden kann.

Erfindungsgemäß wird die Aufgabe durch ein Steuerverfahren mit den Merkmalen des Patentanspruchs 1 gelöst, wobei der Abgasgegendruck über das Regelsystem erhöht wird, wobei eine Abgasrückführrate erhalten bleibt, und dass hierbei eine in den Brennraum einzuspritzende Kraftstoffmenge während der Haupteinspritzung erhöht wird, und/oder dass die Haupteinspritzung auf einen späteren Zeitpunkt verlegt wird.

Die Erhöhung des Abgasgegendrucks und die Erhöhung der einzuspritzenden Kraftstoffmenge kann auch als erster Schritt bezeichnet werden. Die Verlegung der Haupteinspritzung auf einen späteren Zeitpunkt kann auch als zweiter Schritt bezeichnet werden. Es liegt im Sinne der Erfindung zunächst den ersten Schritt durchzuführen, an dem sich der zweite Schritt anschließt, wenn die gewünschte Abgastemperatur bzw. das gewünschte Abgastemperaturniveau mittels des ersten Schrittes nicht erreicht wird.

Ein auf die Anmelderin zurückgehendes, vorangemeldetes aber bisher unveröffentlichtes, und dieser Erfindung zugrunde liegendes System bietet die Möglichkeit mittels Abgasdrosselung den Abgasgegendruck zu erhöhen und somit die Temperatur im Abgasstrang signifikant zu erhöhen. Ferner kann die Erhöhung des Abgasgegendrucks genutzt werden, um das Druckgefälle über die AGR-Strecke bzw. AGR-Leitung zu erhöhen, um so die Regelbarkeit der Abgasrückführung zu verbessern. Auf dieses System wird hiermit Bezug genommen.

Um zu erreichen, dass der Fahrer des Kraftfahrzeugs bei einem ansteigenden Abgasgegendruck den damit verbundenen Leistungsabfall nicht bemerkt oder durch eine Mehrbetätigung des Gaspedals diesem Leistungsabfall entgegenwirkt, ist vorteilhaft vorgesehen, dass die einzuspritzende Kraftstoffmenge während der Haupteinspritzung erhöht wird. Dadurch wird erreicht, dass der Fahrer, während die Abgastemperatur erhöht wird, einen Leistungsabfall nicht bemerkt, da die Drehzahl gleich bleibt, während der Verbrennungsmotor in einem höheren innermotorischen Lastbereich arbeitet. Die vorgesehene Erhöhung der eingespritzten Kraftstoffmenge wirkt sich aber lediglich auf die Temperatur der Abgase auf, wodurch, wenn die gewünschte Abgastemperatur erreicht ist, auf eine motorölverdünnende Nacheinspritzung verzichtet werden kann, womit eine kurzzeitige Verringerung der Effektivität des Verbrennungsmotors akzeptiert werden kann.

Insbesondere nach einem Kaltstart des Verbrennungsmotors, wirkt sich das erfindungsgemäße Verfahren dahingehend vorteilhaft aus, als die Betriebstemperatur des Katalysators durch die erhöhte Abgastemperatur früher erreicht werden kann. Damit kann der Katalysator die CO und HC-Emissionen frühzeitig nach dem Start des Verbrennungsmotors reduzieren.

In erfindungsgemäßer Ausgestaltung weist das Regelsystem ein Abgasrückführventil, eine in dem Abgasstrang integrierte Klappe und einen im Bereich der Klappe angeordneten Bypaß auf, in dem ein Ventil angeordnet ist. Vorteilhaft werden modellartig beide Ventile als ein einzelnes Ventil mit einer Gesamtöffnungsfläche angesehen, die sich in jeweils eine Teilfläche des Abgasrückführventils und des Ventils aufteilt. Erfindungsgemäß werden das Abgasrückführventil und das Ventil über eine Steuerstruktur gemeinsam so in ihrem Öffnungsbetrag gesteuert, dass ein Abgasgegendrucksollwert und ein Sollwert der Abgasrückführrate erreicht wird, wobei die Gesamtöffnungsfläche beider Ventile zusammen betrachtet wird.

Die Steuerstruktur weist bevorzugt einen Entscheidungsblock, eine Steuereinrichtung und einen Einstellblock auf. In dem ersten Schritt werden dem Entscheidungsblock Eingabeparameter wie zum Beispiel Sollwert-Abgasgegendruck erhöhen, Massenstrom-Turbine, Umgebungsdruck, Temperatur hinter dem Dieselpartikelfilter, gemessener Abgasgegendruck, Sollwert der Abgasrückführrate, geschätzter Massenstrom durch den Motor (Frischluft + Abgas), geschätzte Abgasrückführrate und ein Signal einer zeitlichen Aktualisierung der obigen Eingabeparameter zugeführt. Der Entscheidungsblock generiert daraus Entscheidungssignale wie zum Beispiel Aktivschalten der beiden Ventile, Sollwert-Gesamtfläche der beiden Ventile bezogen auf einen erforderlichen Öffnungsbetrag, gemessene Gesamtfläche der beiden Ventile bezogen auf einen erforderlichen Öffnungsbetrag, Sollwert Verteilung der beiden Ventilflächen bezogen auf einen erforderlichen Öffnungsbetrag, geschätzter Wert der Verteilung der beiden Ventilflächen bezogen auf einen erforderlichen Öffnungsbetrag, Aktivschalten des Abgasrückführventils, wenn die Abgasrückführrate größer als Null sein soll, oder Inaktivschalten des Abgasrückführventils, wenn die Abgasrückführrate Null sein soll.

Diese Entscheidungssignale werden zusammen mit dem Signal der zeitlichen Aktualisierung der Steuereinrichtung zugeführt. Mittels des Signals der zeitlichen Aktualisierung wird sichergestellt, dass stets die aktuellen Betriebsbedingungen in die Steuerstruktur einfließen. Der Zeitabstand zur Aktualisierung liegt vorzugsweise im Millisekunden Bereich. Beispielsweise können alle zehn Millisekunden die erforderlichen Werte aktualisiert werden.

Die Steuereinrichtung generiert aus den zugeführten Entscheidungssignalen Steuersignale zur Steuerung der Gesamtfläche der beiden Ventile und ein Steuersignal zur Verteilung der Gesamtfläche auf die beiden Ventile.

Die Steuersignale werden zusammen mit den Entscheidungssignal Aktivschalten der beiden Ventile dem Einstellblock zugeführt, welcher daraus Einstellsignale wie zum Beispiel Schließen der Klappe, Öffnen des Ventils in einem Bereich zwischen 0% und 100% und Öffnen des Abgasrückführventils in einem Bereich zwischen 0% und 100% generiert. Die Einstellsignale werden an das entsprechende Ventil übermittelt.

Dadurch steigen der Abgasgegendruck und die Abgastemperatur, wobei die Abgasrückführrate auf dem gewünschten Sollwert bleibt. Gleichzeitig wird dadurch aber ein Leistungsabfall bewirkt, welchem dadurch entgegengetreten wird, dass gleichzeitig die einzuspritzende Kraftstoffmenge während der Haupteinspritzung erhöht wird, wodurch wiederum die Abgastemperatur angehoben wird.

Mittels dieses ersten Schritts, wird die Abgastemperatur signifikant erhöht, ohne dass eine Nacheinspritzung erforderlich ist. Die Steuerstruktur ist bevorzugt in ein Motorsteuergerät (ECU) implementiert. Insbesondere nach einem Kaltstart des Verbrennungsmotors kann der Katalysator mittels der erhöhten Abgastemperatur früher auf seine Betriebstemperatur geführt werden.

Erreichen die Abgase nach dem ersten Schritt die gewünschte Abgastemperatur noch nicht, ist vorteilhaft vorgesehen, dass in dem sich anschließenden zweiten Schritt die Haupteinspritzung auf einen späteren Zeitpunkt verlegt wird. Durch das spätere Durchführen der Haupteinspritzung wird die Effektivität des Verbrennungsmotors weiter reduziert. Um zu vermeiden, dass diese Verschlechterung von dem Fahrer wahrgenommen wird, oder der Fahrer dem mittels Betätigung des Gaspedals entgegenwirkt, wird daher die einzuspritzende Kraftstoffmenge während der Haupteinspritzung noch einmal erhöht.

Die Haupteinspritzung wird im zweiten Schritt auf einen Zeitpunkt näher zum oberen Totpunkt oder auf einen Zeitpunkt nach dem oberen Totpunkt verlegt, so dass ein größerer Anteil der Wärmeenergie des verbrennenden Kraftstoffs zur Erhöhung der Abgastemperatur zur Verfügung steht.

Die Erhöhung der Abgastemperatur ist jeweils nur zeitlich begrenzt. So kann eine Erhöhung der Abgastemperatur zeitlich nur so lange erforderlich sein, bis der Katalysator seine Betriebstemperatur erreicht hat. Danach werden die Maßnahmen des ersten Schrittes und ggf. des zweiten Schrittes auf den ursprünglichen Zustand zurückgeführt. Eine Erhöhung der Abgastemperatur kann aber auch zur Regenerierung des Dieselpartikelfilters notwendig sein, so dass das Steuerverfahren nur für die Dauer der Regeneration des Dieselpartikelfilters durchgeführt wird.

Vorteilhaft kann mittels des erfindungsgemäßen Verfahrens ein Katalysator mit reduzierter Beladung, d.h. mit reduziertem Edelmetallanteil verwendet werden, als der heutige Stand der Technik zuläßt, wodurch erhebliche Kosteneinsparungen erzielt werden. Eine Motorölverdünnung, welche durch eine späte Nacheinspritzung verursacht werden kann, ist ebenfalls vermieden, wobei durch die erhöhte innermotorischen Energiefreisetzung, bedingt durch den erhöhten Abgasgegendruck und/oder durch die Verlegung des Einspritzzeitpunktes bzw. der Anpassung des/der Kraftstoffeinspritzzeitpunkts(en) auch ein schnelleres Aufwärmen der Fahrerkabine erreicht werden kann.

Selbstverständlich muß darauf hingewiesen werden, dass eine Verlagerung der Haupteinspritzung nach einem Kaltstart des Verbrennungsmotors nur bei entsprechenden Umgebungsbedingungen sinnvoll ist. Beispielsweise sollte die Verlagerung der Haupteinspritzung nach einem Kaltstart des Verbrennungsmotors nicht durchgeführt, wenn die Umgebungstemperatur derart niedrig ist, dass die erwarteten Vorteile nicht erreicht werden. Zur Regeneration des Dieselpartikelfilters dagegen kann die Verlagerung der Haupteinspritzung jederzeit durchgeführt werden, da der Verbrennungsmotor dann üblicherweise die Temperatur aufweist, um beispielsweise einen unruhigen Motorlauf zu vermeiden.

Weitere vorteilhafte Ausgestaltungen der Erfindung sind in den Unteransprüchen und der folgenden Figurenbeschreibung offenbart. Es zeigen
- Fig. 1: eine Prinzipskizze eines turbogeladenen Verbrennungsmotors mit Abgasrückführung,
- Fig. 2: ein Ablaufdiagramm des Steuerverfahrens zur Erhöhung der Abgastemperatur,
- Fig. 3: eine Prinzipskizze zur Darstellung einer modellartigen Gesamtfläche zweier Ventile, und
- Fig. 4: eine Teilsteuerstruktur als Prinzipdarstellung zur Erhöhung der Abgastemperatur.

In den jeweiligen Figuren sind gleiche Teile stets mit denselben Bezugszeichen versehen, weswegen diese in der Regel auch nur einmal beschrieben werden.

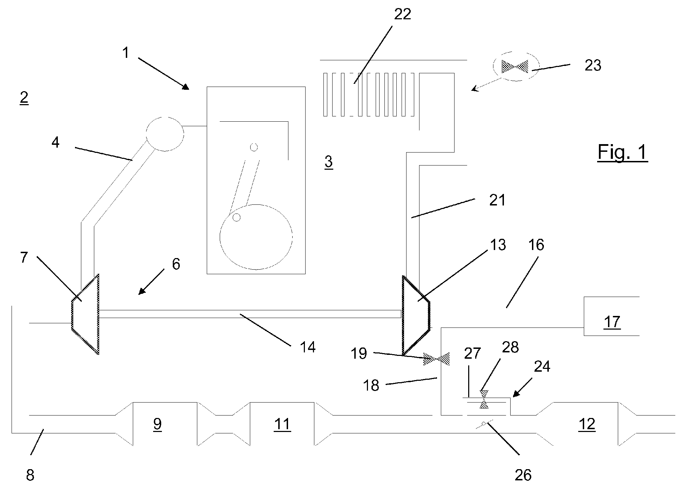

Fig. 1 zeigt einen turbogeladenen Verbrennungsmotor 1 mit einer Auslaßseite 2 und einer Einlaßseite 3. Der Verbrennungsmotor 1 kann als Ein- oder Mehrzylindermotor ausgeführt sein, wobei der Verbrennungsmotor selbstverständlich auch als V-Motor oder in irgendeiner anderen Ausgestaltung ausgeführt sein kann. Das dargestellte Ausführungsbeispiel bezieht sich auf einen Dieselmotor, soll jedoch nicht auf Dieselmotoren limitiert sein.

Die Erhöhung der Abgastemperatur bei diesem beispielhaften Verbrennungsmotor wird mittels eines Steuerverfahrens erreicht, welches weiter unten beschrieben wird.

Der Auslaßseite 2 ist eine Abgasleitung 4 zugeordnet, welche die in dem Verbrennungsmotor 1 entstehenden Abgase einem Turbolader 6 bzw. seiner Turbinenseite 7 zuführen und die Turbinenseite 7 durchströmen. Aus der Turbinenseite 7 strömen die Abgase in einen Abgasstrang 8, in dem nacheinander ein Katalysator 9, ein Dieselpartikelfilter bzw. Partikelfilter 11 und ein Schalldämpfer 12 angeordnet ist.

Gegenüberliegend zur Turbinenseite 7 weist der Turbolader 6 eine Verdichterseite 13 auf, wobei die Turbinenseite 7 über eine Welle 14 mit der Verdichterseite 13 verbunden ist.

In der Verdichterseite 13 mündet eine Frischluftleitung 16, welche Frischluft durch einen Luftfilter 17 strömend der Verdichterseite 13 zuführt.

In der Frischluftleitung 16 mündet zudem eine Abgasrückführleitung 18 (AGR-Leitung), welche Abgase stromabwärts der Turbinenseite 7 bzw. in dem dargestellten Ausführungsbeispiel stromabwärts des Dieselpartikelfilters 11 aus dem Abgasstrang 8 entnehmen und zur Frischluftleitung 16 leitet. Der Abgasrückführleitung 18 kann ein Wärmetauscher vor einem AGR-Ventil 19 zugeordnet sein, um Nachteile bezüglich zu hoher Temperaturen des Frischluft/Abgasgemisches vor dem Verdichter zu vermeiden. Dieser Wärmetauscher kann zweckmäßigerweise eine Vorrichtung zum Ablassen des Kondensats vor dem Verdichter aufweisen.

Die Frischluft und die rückgeführten Abgase vermischen sich in der Frischluftleitung 16 und strömen in die Verdichterseite 13 des Turboladers 6 ein und werden in eine einlaßseitige Saugleitung 21 gefördert.

In der Saugleitung 21 ist ein Kühlelement 22 integriert, so dass die mit der Frischluft bzw. den frischen Verbrennungsgasen vermischten Abgase in der Saugleitung 21 bzw. innerhalb der Saugleitung 21 gekühlt werden. Das Kühlelement 22 ist als kombinierter Kühler ausgeführt. Der Saugleitung 21 ist zudem ein Ventil 23 zugeordnet, um die Saugleitung 21 zu schließen, wenn der Verbrennungsmotor ausgeschaltet ist.

In dem Abgasstrang 8 ist stromabwärts der Abgasrückführleitung 18 ein Regelsystem 24 zur Regelung des Abgasgegendrucks und der Abgasrückführung angeordnet. Das Regelsystem 24 ist in dem dargestellten Ausführungsbeispiel stromaufwärts des Schalldämpfers 12 angeordnet. Das Regelsystem 24 weist eine in den Abgasstrang 8 integrierte Klappe 26 und im Bereich der Klappe 26 angeordneten Bypaß 27 auf, in dem ein Ventil 28 angeordnet ist. Natürlich soll dieses Ausführungsbeispiel zur Regelung des Abgasgegendrucks nicht auf das beschriebene System beschränkt sein, wobei alle geeigneten Systeme zur Regelung des Abgasgegendrucks einsetzbar sein können. Günstiger Weise kann das im Abgasstrang 8 angeordnete Regelsystem 24 während der Regenerationsphase des Partikelfilters 11 bzw. des Dieselpartikelfilters verwendet werden, und den Abgasgegendruck erhöhen, wobei z. B. eine Motorölverdünnung durch späte Nacheinspritzung-/en bzw. späte Diesel-Nacheinspritzung-/en verringert bzw. vermieden werden kann. Natürlich kann das Regelsystem auch zur Erhöhung der Abgastemperatur verwendet werden, um den Katalysator nach einem Kaltstart des Verbrennungsmotors schneller auf seine Betriebstemperatur zu führen. Mit der Erhöhung des Abgasgegendrucks kann aber auch eine stabilere Abgasrückführung erreicht werden.

Die Saugleitung 21 mündet einlaßseitig in einen nicht dargestellten Luftverteiler, um die einzelnen Zylinder mit dem erforderlichen Luftstrom bzw. der erforderlichen Menge an Verbrennungsgasen zuzuführen.

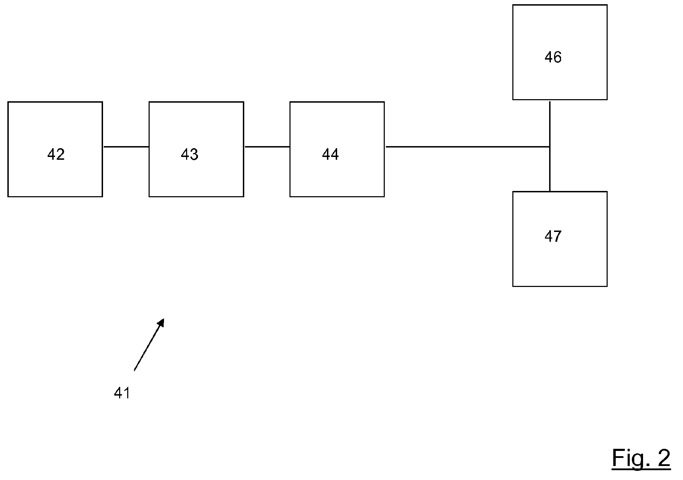

Figur 2 zeigt prinzipiell ein Ablaufdiagramm zur Erhöhung der Abgastemperatur gemäß dem erfindungsgemäßen Steuerverfahren 41. Zunächst wird in einem Startblock 42 die tatsächliche Abgastemperatur festgestellt. In einem folgenden Block 43 wird festgelegt, welche Abgastemperatur notwendig ist. Diese notwendige Abgastemperatur wird abhängig von der Bedingung festgelegt, ob der Katalysator 9 auf seine Betriebstemperatur gebracht werden soll, oder ob der Partikelfilter 11 regeneriert werden soll. Beide beispielhaften Abgastemperaturen sind in ihrem Betrag natürlich unterschiedlich. Zum Erreichen der Betriebstemperatur des Katalysators 9, insbesondere nach einem Kaltstart des Verbrennungsmotors ist eine geringere Abgastemperatur erforderlich als zur Regeneration des Partikelfilters 11.

Der in dem Block 43 festgelegte Sollwert der Abgastemperatur wird einem Temperaturregler 44 zur Erhöhung der Abgastemperatur zugeführt, in welchen auch Umwelteinflüsse, beispielsweise Signale bezüglich der Umgebungstemperatur einfließen. Nach dem Temperaturregler 44 teilt sich das Verfahren in einen ersten Schritt 46 und in zweiten Schritt 47. Beide Schritte 46 und 47 können parallel und/oder getrennt voneinander durchgeführt werden.

In dem ersten Schritt 46 wird die Erhöhung der Abgastemperatur dadurch erreicht, dass der Abgasgegendruck über das Regelsystem 24 erhöht wird, wobei eine Abgasrückführrate erhalten bleibt, und dass in dem ersten Schritt 46 eine in den Brennraum einzuspritzende Kraftstoffmenge während der Haupteinspritzung erhöht wird. In dem zweiten Schritt 47 wird die Erhöhung der Abgastemperatur dadurch erreicht, dass die Haupteinspritzung auf einen späteren Zeitpunkt verlegt wird, wenn die erforderliche Abgastemperatur mittels des ersten Schrittes 46 nicht erreicht wird.

Die Erhöhung der Abgastemperatur soll nur zeitlich begrenzt erfolgen, so dass nach Erreichen der Betriebstemperatur des Katalysators 9 bzw. der durchgeführten Regeneration des Partikelfilters 11 zu den ursprünglichen Betriebsparametern des Verbrennungsmotors zurückgekehrt wird.

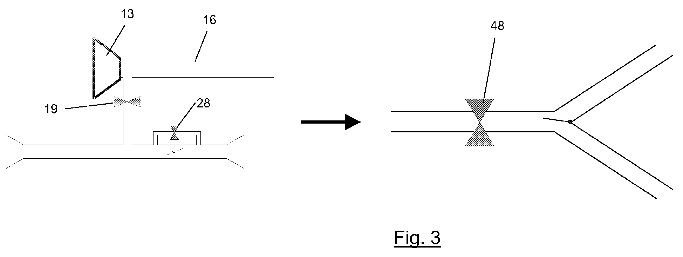

Für den ersten Schritt 46 werden die beiden Ventile 19 und 28 modellartig als ein einzelnes Ventil 48 (Figur 3) angesehen, welches eine Gesamtfläche aufweist, die sich eigentlich aus den jeweiligen Teilflächen der beiden Ventile 19 und 28 zusammensetzt. Diesem Ansatz liegt die Erkenntnis zugrunde, dass ein Druckabfall über beide Ventile 19 und 28 quasi äquivalent ist, und dass eine Steuerung der Verteilung der geöffneten bzw. geschlossenen Teilflächen beider Ventile 19 und 28 annähernd äquivalent zur Steuerung der Abgasrückführrate ist.

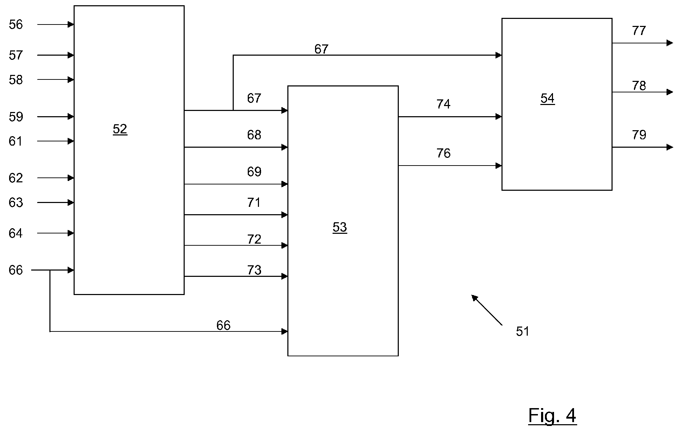

Der erste Schritt 46 zur Erhöhung der Abgastemperatur mittels des Regelsystems 24 ist beispielhaft in der Steuerstruktur 51 gemäß Figur 4 dargestellt.

Die Steuerstruktur 51 weist bevorzugt einen Entscheidungsblock 52, eine Steuereinrichtung 53 und einen Einstellblock 54 auf. In dem ersten Schritt 46 werden dem Entscheidungsblock 52 Eingabeparameter wie zum Beispiel Sollwert-Abgasgegendruck erhöhen 56, Massenstrom-Turbine 57, Umgebungsdruck 58, Temperatur hinter dem Dieselpartikelfilter 59, gemessener Abgasgegendruck 61, Sollwert der Abgasrückführrate 62, geschätzter Massenstrom durch den Motor (Frischluft + Abgas) 63, geschätzte Abgasrückführrate 64 und ein Signal 66 einer zeitlichen Aktualisierung der obigen Eingabeparameter zugeführt. Der Entscheidungsblock 52 generiert daraus Entscheidungssignale wie zum Beispiel Aktivschalten 67 der beiden Ventile, Sollwert-Gesamtfläche 68 der beiden Ventile bezogen auf einen erforderlichen Öffnungsbetrag, gemessene Gesamtfläche 69 der beiden Ventile bezogen auf einen erforderlichen Öffnungsbetrag, Sollwert Verteilung 71 der beiden Ventilflächen bezogen auf einen erforderlichen Öffnungsbetrag, geschätzter Wert der Verteilung 72 der beiden Ventilflächen bezogen auf einen erforderlichen Öffnungsbetrag, Aktivschalten 73 des Abgasrückführventils , wenn die Abgasrückführrate größer als Null sein soll, oder Inaktivschalten 73 des Abgasrückführventils, wenn die Abgasrückführrate Null sein soll.

Diese Entscheidungssignale werden zusammen mit dem Signal 66 der zeitlichen Aktualisierung der Steuereinrichtung 53 zugeführt. Mittels des Signals 66 der zeitlichen Aktualisierung wird sichergestellt, dass stets die aktuellen Betriebsbedingungen in die Steuerstruktur 51 einfließen. Der Zeitabstand zur Aktualisierung liegt vorzugsweise im Millisekunden Bereich. Beispielsweise können alle zehn Millisekunden die erforderlichen Werte aktualisiert werden.

Die Steuereinrichtung 53 generiert aus den zugeführten Entscheidungssignalen Steuersignale zur Steuerung der Gesamtfläche 74 der beiden Ventile und ein Steuersignal zur Verteilung 76 der Gesamtfläche auf die beiden Ventile.

Die Steuersignale 74 und 76 werden zusammen mit den Entscheidungssignal 67 Aktivschalten der beiden Ventile dem Einstellblock 54 zugeführt, welcher daraus Einstellsignale wie zum Beispiel Schließen 77 der Klappe, Öffnen 78 des Ventils 28 in einem Bereich zwischen 0% und 100% und Öffnen 79 des Abgasrückführventils 19 in einem Bereich zwischen 0% und 100% generiert. Die Einstellsignale 78 und 79 werden an das entsprechende Ventil 19 und 28 übermittelt.

Dadurch steigt der Abgasgegendruck, wobei die Abgasrückführrate aufrechterhalten bleibt. Gleichzeitig wird dadurch aber ein Leistungsabfall bewirkt, welchem dadurch entgegengetreten wird, dass gleichzeitig die einzuspritzende Kraftstoffmenge während der Haupteinspritzung erhöht wird, wodurch wiederum die Abgastemperatur angehoben wird.

Wird die gewünschte Abgastemperatur mittels des ersten Schrittes 46 nicht erreicht, wird in dem Folgenden zweiten Schritt 47 die Abgastemperatur dadurch erhöht, dass die Haupteinspritzung auf einen späteren Zeitpunkt verlagert wird. Hierdurch sinkt die Effektivität des Verbrennungsmotors weiter, weswegen die einzuspritzende Kraftstoffmenge während der Haupteinspritzung abermals erhöht wird.

Folgende Werte sollen beispielhaft das Steuerverfahren veranschaulichen:
In dem ersten Schritt 46 wird festgestellt, dass die Abgastemperatur den erforderlichen Betrag nicht erreicht hat, so dass der Abgasgegendruck zum Beispiel auf zwei bar (drei bar) erhöht werden muß. Dies bedingt eine Erhöhung der einzuspritzenden Kraftstoffmenge während der Haupteinspritzung um beispielsweise 20% (30%). Reicht diese Maßnahme nicht aus, wird die Haupteinspritzung auf einen späteren Zeitpunkt verlegt, beispielsweise auf einen Zeitpunkt kurz vor oder kurz nach dem Oberen Totpunkt, je nach dem welche Temperatur erreicht werden soll.

Dies bedingt aber wiederum eine Anhebung der einspritzenden Kraftstoffmenge um zum Beispiel 10 %, so dass der Fahrer den Leistungsabfall nicht bemerkt. Der Betrag der zusätzlich einzuspritzenden Kraftstoffmenge ist abhängig von dem Zeitpunkt, auf welchen die Haupteinspritzung verlagert wird. Ein geringerer zusätzlicher Betrag ist einzuspritzen, wenn die Haupteinspritzung kurz vor den Oberen Totpunkt verlagert wird, während ein höherer Betrag zusätzlich eingespritzt werden sollte, wenn die Haupteinspritzung auf einen Zeitpunkt hinter den oberen Totpunkt verlagert wird. Ist die gewünschte Abgastemperatur erreicht, also hat der Katalysator 9 seine Betriebstemperatur erreicht, oder für den Fall, dass die Regeneration des Partikelfilters 11 abgeschlossen ist, wird zu den ursprünglichen Parametern zurückgekehrt.

Natürlich liegt es Sinne der Erfindung, wenn die Haupteinspritzung auf einen späteren Zeitpunkt verlagert wird, um die Abgastemperatur nach einem Kaltstart zu erhöhen. Wenn aber die Umgebungstemperatur bzw. Kühlwassertemperatur so gering ist, dass beispielsweise ein ruhiger Motorlauf nicht gewährleistet werden könnte, ist dies nicht sinnvoll. Günstiger Weise sollte also zunächst der erste Schritt 46 durchgeführt werden, um dann den zweiten Schritt 47 durchzuführen.

Wenn mittels der beiden Schritte 46 und 47 die erwünschte Abgastemperatur nicht erreicht wird, kann eine Nacheinspritzung durchgeführt werden. Vorteilhaft kann diese Nacheinspritzung aufgrund der erfindungsgemäßen Maßnahmen im Vergleich zum Stand der Technik zeitlich näher an die Haupteinspritzung angelagert werden, da die Kurbelwellenleistung durch den erhöhten Abgasgegendruck, in Kombination mit der höheren innermotorischen Leistung, konstant bleibt. Dadurch kann der Ölverdünnungseffekt aufgehoben oder zumindest stark reduziert werden.

## Patentansprüche

1. Steuerverfahren zur Erhöhung der Abgastemperatur eines Verbrennungsmotors, der in seinem Abgasstrang (8) zumindest eine Abgasnachbehandlungseinrichtung (9, 11) hat, und der ein Abgasrückführsystem aufweist, dem ein Regelsystem (24) zugeordnet ist,
wobei
das Regelsystem (24) ein Abgasrückführventil (19), eine in dem Abgasstrang (8) integrierte Klappe (26) und einen im Bereich der Klappe (26) angeordneten Bypass (27) aufweist, in dem ein Ventil (28) angeordnet ist, wobei der Abgasgegendruck über das Regelsystem (24), unter Beibehaltung der Abgasrückführrate erhöht wird, indem das Abgasrückführventil (19) und das Ventil (28) über eine Steuerstruktur (51) gemeinsam so in ihrem Öffnungsbetrag gesteuert werden, dass ein Abgasgegendrucksollwert und ein Sollwert der Abgasrückführrate erreicht wird, wobei die Gesamtöffnungsfläche beider Ventile zusammen betrachtet wird,
umfassend
einen ersten Schritt (46) in dem der Abgasgegendruck über das Regelsystem (24) erhöht wird, wobei die Abgasrückführrate erhalten bleibt, wobei in dem ersten Schritt (46) die in den Brennraum einzuspritzende Kraftstoffmenge während der Haupteinspritzung erhöht wird und,
einen zweiten Schritt (47), in welchem die Haupteinspritzung auf einen späteren Zeitpunkt verlegt wird, wenn die erforderliche Abgastemperatur mittels des ersten Schrittes (46) nicht erreicht wird, wobei die in den Brennraum einzuspritzende Kraftstoffmenge abermals erhöht wird.

2. Steuerverfahren nach Anspruch 1,
**dadurch gekennzeichnet, dass**
die Steuerstruktur (51), einen Entscheidungsblock (52), eine Steuereinrichtung (53) und einen Einstellblock (54) aufweist, wobei in dem ersten Schritt (46) dem Entscheidungsblock (52) Eingabeparameter wie zum Beispiel Sollwert-Abgasgegendruck erhöhen (56), Massenstrom-Turbine (57), Umgebungsdruck (58), Temperatur hinter dem Dieselpartikelfilter (59), gemessener Abgasgegendruck (61), Sollwert der Abgasrückführrate (62), geschätzter Massenstrom durch den Motor (63), geschätzte Abgas-rückführrate (64) und ein Signal (66) einer zeitlichen Aktualisierung der obigen Eingabeparameter zugeführt werden, wobei der Entscheidungsblock 52 daraus Entscheidungssignale wie zum Beispiel Aktivschalten (67) der beiden Ventile, Sollwert-Gesamtfläche (68) der beiden Ventile bezogen auf einen erforderlichen Öffnungsbetrag, gemessene Gesamtfläche (69) der beiden Ventile bezogen auf einen erforderlichen Öffnungsbetrag, Sollwert Verteilung (71) der beiden Ventilflächen bezogen auf einen erforderlichen Öffnungsbetrag, geschätzter Wert der Verteilung (72) der beiden Ventilflächen bezogen auf einen erforderlichen Öffnungsbetrag, Aktivschalten (73) des Abgasrückführventils, wenn die Abgasrückführrate größer als Null sein soll, oder Inaktivschalten (73) des Abgasrückführventils, wenn die Abgasrückführrate Null sein soll, generiert, wobei diese Entscheidungssignale zusammen mit dem Signal (66) der zeitlichen Aktualisierung der Steuereinrichtung (53) zugeführt werden, wobei die Steuereinrichtung (53) aus den zugeführten Entscheidungssignalen Steuersignale zur Steuerung der Gesamtfläche (74) der beiden Ventile und ein Steuersignal zur Verteilung (76) der Gesamtfläche auf die beiden Ventile generiert, wobei die Steuersignale (74, 76) zusammen mit den Entscheidungssignal (67) Aktivschalten der beiden Ventile dem Einstellblock (54) zugeführt werden, welcher daraus Einstellsignale wie zum Beispiel Schließen (77) der Klappe, Öffnen (78) des Ventils (28) in einem Bereich zwischen 0% und 100% und Öffnen (79) des Abgasrückführventils (19) in einem Bereich zwischen 0% und 100% generiert

## Claims

1. Control method for increasing the exhaust gas temperature of an internal combustion engine, which has at least one exhaust gas aftertreatment device (9, 11) in its exhaust tract (8), and which has an exhaust gas recirculation system, to which a regulating system (24) is assigned, wherein the regulating system (24) has an exhaust gas recirculation valve (19), a flap valve (26) incorporated into the exhaust tract (8), and a bypass (27) arranged in the area of the flap valve (26), in which a valve (28) is arranged, wherein the exhaust gas back-pressure is increased via the regulating system (24), whilst maintaining the exhaust gas recirculation rate, in that the degree of opening of the exhaust gas recirculation valve (19) and that of the valve (28) are jointly controlled by one control structure (51), so that an exhaust gas back-pressure setting and an exhaust gas recirculation rate setting are achieved, wherein the aggregate opening area of both valves together is considered, comprising a first step (46) in which the regulating system (24) increases the exhaust gas back-pressure, whilst maintaining the exhaust gas recirculation rate, wherein in the first step (46) the fuel injection quantity into the combustion chamber is increased during the main injection, and a second step (47) in which the main injection is deferred to a later time if the required exhaust gas temperature is not achieved by means of the first step (46), wherein the fuel injection quantity into the combustion chamber is again increased.

2. Control method according to Claim 1, **characterized in that** the control structure (51) comprises a decision block (52), a control device (53) and an adjustment block (54), wherein in the first step (46) input parameters such as an increase (56) in the exhaust gas back-pressure setting, the turbine mass flow (57), the ambient pressure (58), the temperature downstream of the diesel particle filter (59), the measured exhaust gas back-pressure (61), the setting for the exhaust gas recirculation rate (62), the estimated mass flow through the engine (63), the estimated exhaust gas recirculation rate (64) and a signal (66) for an updating of the aforementioned input parameters are fed to the decision block (52), the decision block (52) from these signals generating decision signals such as, for example, activation (67) of the two valves, aggregate area setting (68) of the two valves for a required degree of opening, measured aggregate area (69) of the two valves for a required degree of opening, setting for the distribution (71) of the two valve areas for a required degree of opening, estimated value of the distribution (72) of the two valve areas for a required degree of opening, activation (73) of the exhaust gas recirculation valve, if the exhaust gas recirculation rate should be greater than zero, or deactivation (73) of the exhaust gas recirculation valve, if the exhaust gas recirculation rate should be zero, these decision signals being delivered to the control device (53) together with the updating signal (66), the control device (53) from the decision signals delivered generating control signals for controlling the aggregate area (74) of the two valves and a control signal for distribution (76) of the aggregate area between the two valves, the control signals (74, 76) together with the decision signal (67) for activation of the two valves being delivered to the adjustment block (54), which from these signals generates adjustment signals such as, for example, closing (77) of the flap valve, opening (78) of the valve (28) in a range between 0% and 100% and opening (79) of the exhaust gas recirculation valve (19) in a range between 0% and 100%.

## Revendications

1. Procédé de commande destiné à l'augmentation de la température des gaz d'échappement d'un moteur à combustion interne qui comporte dans sa conduite de gaz d'échappement (8) au moins un dispositif de post-traitement des gaz (9, 11) et qui comprend un système de recirculation de gaz d'échappement auquel est associé un système de régulation (24),
dans lequel
le système de régulation (24) comprend une soupape de recirculation de gaz d'échappement (19), un clapet (26) intégré à la conduite de gaz d'échappement (8) et une dérivation (27), disposée dans la région du clapet (26), dans laquelle est disposée une soupape (28), dans lequel la pression de gaz d'échappement est augmentée par l'intermédiaire du système de régulation (24) par maintien du taux de recirculation de gaz d'échappement en commandant le degré d'ouverture total de la soupape de recirculation de gaz d'échappement (19) et de la soupape (28) par l'intermédiaire d'une structure de commande (51) de manière à ce qu'une valeur de consigne de la contre-pression de gaz d'échappement et une valeur de consigne du taux de recirculation de gaz d'échappement soient atteintes, dans lequel la surface d'ouverture totale des deux soupapes est considérée globalement,
comprenant
une première étape (46) lors de laquelle la pression de gaz d'échappement est augmentée par l'intermédiaire du système de régulation (24), dans lequel le taux de recirculation de gaz d'échappement reste inchangé, dans lequel la quantité de carburant injectée dans la chambre de combustion pendant l'injection principale est augmentée lors de la première étape (46), et
une seconde étape (47) lors de laquelle l'injection principale est reportée à un instant ultérieur lorsque la température nécessaire des gaz d'échappement n'a pas été atteinte au moyen de la première étape (46), dans lequel la quantité de carburant injectée dans la chambre de combustion est une fois encore augmentée.

2. Procédé de commande selon la revendication 1, **caractérisé en ce que** la structure de commande (51) comprend un bloc de décision (52), un dispositif de commande (53) et un bloc de réglage (54), dans lequel, lors de la première étape (46), des paramètres d'entrée sont fournis au bloc de décision (52), comme par exemple pour augmenter (56) la valeur de consigne de la contre-pression de gaz d'échappement, une turbine à débit massique (57), la pression ambiante (58), la température à l'arrière du filtre antiparticules diesel (59), la contre-pression de gaz d'échappement mesurée (61), la valeur de consigne du taux de recirculation de gaz d'échappement (62), le débit massique estimé à travers le moteur (63), le taux estimé de recirculation de gaz d'échappement (64) et un signal (66) d'une actualisation temporelle des paramètres d'entrée précités, dans lequel le bloc de décision (52) génère à partir de ceux-ci des signaux de décision, comme par exemple l'activation (67) des deux soupapes, la surface totale de consigne (68) des deux soupapes par rapport à un degré d'ouverture nécessaire, la surface totale mesurée (69) des deux soupapes par rapport au degré nécessaire d'ouverture, la valeur de consigne de la répartition (71) des deux surfaces de soupapes par rapport à un degré d'ouverture nécessaire, une valeur estimée de la répartition (72) des deux surfaces de soupapes par rapport à un degré d'ouverture nécessaire, l'activation (73) de la soupape de recirculation de gaz d'échappement lorsque le taux de recirculation de gaz d'échappement doit être supérieur à zéro ou l'inactivation (73) de la soupape de recirculation de gaz d'échappement lorsque le taux de recirculation de gaz d'échappement doit être nul, dans lequel lesdits signaux de décision sont acheminés en association avec le signal (66) d'actualisation temporelle au dispositif de commande (53), dans lequel le dispositif de commande (53) génère à partir des signaux de décision qui lui sont acheminés, des signaux de commande destinés à commander la surface totale (74) des deux soupapes et un signal de commande destiné à répartir (76) la surface totale entre les deux soupapes, dans lequel les signaux de commande (74, 76) sont acheminés en association avec le signal de décision (67) d'activation des deux soupapes, au bloc de réglage (54) qui génère à partir de ceux-ci des signaux de réglage, comme par exemple la fermeture (77) du clapet, l'ouverture (78) de la soupape (28) dans un intervalle compris entre 0% et 100% et l'ouverture (79) de la soupape de recirculation de gaz d'échappement (19) dans un intervalle compris entre 0% et 100%.
